# FASCICULE DE BREVET EUROPEEN

(11) **EP 1 378 389 B1**
(45) Date de publication et mention de la délivrance du brevet: **09.08.2006**
(21) Numéro de dépôt: 03291532.4
(22) Date de dépôt: 23.06.2003
(51) Int. Cl.: B60K 1/04, H01M 2/10, B60R 16/04

(54) **Bac pour fixer une batterie sur un véhicule**
Gehäuse zum Fixieren einer Batterie auf einem Fahrzeug
Casing for fixing a battery on a vehicle

(30) Priorité: 02.07.2002 FR 0208246
(43) Date de publication de la demande: 07.01.2004
(73) Titulaire: Key Plastics International, 61130 Belleme (FR)
(72) Inventeur: Davril, Jean-Louis, 61400 Mortagne au Perche (FR); Mih, Edouard, 72110 Bonnetable (FR); Roustel, Standley, 61260 La Rouge (FR)
(74) Mandataire: Lemoine, Robert

(56) Documents cités:
- EP-A- 1 069 632
- FR-A- 2 779 010
- US-A- 3 651 883

## Description

La présente invention concerne un bac pour fixer sur un véhicule, notamment sur une automobile, une batterie comportant deux faces latérales opposées pourvues d'au moins un talon, ce bac comprenant un fond destiné à supporter la batterie, quatre parois se dressant sur le fond et s'étendant parallèlement deux à deux, au moins une protubérance interne faisant saillie sur l'une des parois, des moyens d'immobilisation montés sur la paroi située en face de la protubérance et déplaçables entre une position inactive et une position active, et des moyens élastiques sollicitant les moyens d'immobilisation dans leur position active, la protubérance et les moyens d'immobilisation, lorsque ces derniers sont dans leur position active, prenant appui sur la partie supérieure des talons de la batterie quand celle-ci repose sur le fond.

Les batteries équipant les automobiles et autres véhicules routiers sont généralement immobilisées dans leurs bacs respectifs par des brides métalliques vissées sur des éléments filetés.

La mise en place et l'enlèvement des brides posent toutefois des problèmes car leur exécution est relativement longue et malaisée à réaliser et nécessite en outre l'utilisation d'un outil approprié.

La présente invention se propose d'apporter une solution à ces problèmes et, pour ce faire, elle a pour objet un bac pour fixer sur un véhicule, notamment sur une automobile, une batterie dont deux faces latérales opposées sont pourvues d'au moins un talon.

EP-A-1 069 632 décrit un bac de fixation de batterie ayant la structure exposée au premier paragraphe ci-dessus et apportant une solution aux problèmes rencontrés lors de la fixation des batteries à l'aide des brides métalliques.

La présente invention concerne un bac de fixation de batterie du type de celui décrit dans EP-A-1 069 632 et qui apporte une autre solution aux problèmes exposés ci-dessus, ce bac de fixation étant caractérisé en ce que ses moyens d'immobilisation comprennent au moins un volet incliné monté pivotant sur un axe prenant appui sur la paroi située en face de la protubérance et s'étendant parallèlement à cette paroi et au fond, le volet possédant un côté longitudinal supérieur et un côté longitudinal inférieur situé plus près de la protubérance et du fond que le côté supérieur, et étant positionné pour que la batterie le déplace de sa position active à sa position inactive, à l'encontre de l'action des moyens élastiques, lorsqu'elle est amenée contre le fond.

Grâce à cet ensemble de dispositions, la batterie peut être immobilisée rapidement dans le bac.

Il suffit en effet de placer l'un de ses talons sous la protubérance lors de son positionnement sur le fond du bac, les moyens d'immobilisation pouvant ainsi venir dans leur position active afin d'assurer sa fixation dans le bac en coopération avec la protubérance.

L'enlèvement de la batterie peut également être réalisé aisément car il suffit de déplacer les moyens d'immobilisation de leur position active à leur position inactive pour pouvoir l'extraire du bac.

On précisera ici que le volet revient automatiquement dans sa position active sous l'action des moyens élastiques dès que la batterie repose contre le fond du bac.

Pour pouvoir enlever la batterie, il convient de déplacer le volet de sa position active à sa position inactive, ce qui peut être réalisé facilement à l'aide d'une seule main.

D'autres caractéristiques du bac de fixation de batterie selon l'invention sont décrites dans les revendications 2 à 5.

Trois modes de réalisation seront maintenant décrits de façon détaillée en référence aux dessins annexés dans lesquels :
- la figure 1 est une vue en perspective schématique montrant une batterie immobilisée dans un bac selon le premier mode de réalisation ;
- la figure 2 est une vue en coupe partielle prise selon la ligne II-II de la figure 1, la batterie reposant contre le fond du bac ;
- la figure 3 est une vue analogue à la figure 2 mais montrant la batterie pendant son enlèvement du bac ;
- la figure 4 est une vue de dessus schématique et partielle montrant une batterie installée dans un bac selon le deuxième mode de réalisation, les moyens d'immobilisation étant dans leur position active ;
- la figure 5 est une vue en coupe schématique selon la ligne V-V de la figure 4 ;
- la figure 6 est une vue de dessus schématique et partielle du bac selon le deuxième mode de réalisation, cette vue montrant les moyens d'immobilisation dans leur position inactive alors que la batterie n'est pas installée dans le bac ;
- la figure 7 est une vue en coupe schématique selon la ligne VII-VII de la figure 6, une batterie étant en cours d'installation dans le bac ;
- la figure 8 est une vue en coupe selon la ligne VIII-VIII de la figure 7 ;
- la figure 9 est une vue de dessus schématique et partielle montrant une batterie installée dans un bac selon le troisième mode de réalisation, les moyens d'immobilisation étant dans leur position active ;
- la figure 10 est une vue en coupe schématique selon la ligne X-X de la figure 9 ; et
- la figure 11 est une vue analogue à celle de la figure 10 mais montrant les moyens d'immobilisation dans leur position inactive et la batterie en cours d'installation dans le bac.

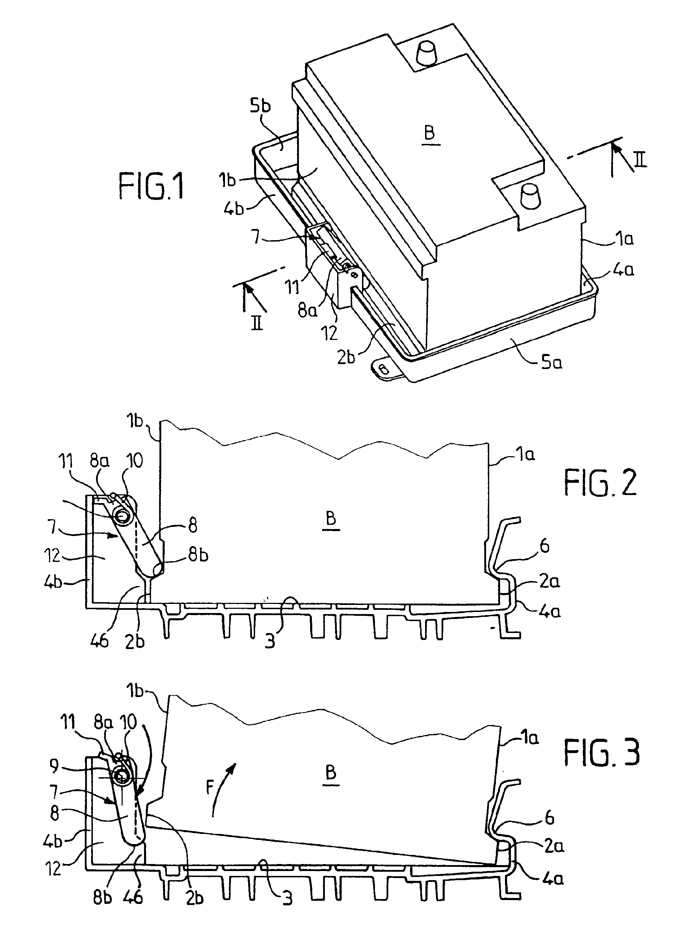

Les figures 1 à 3 représentent une batterie B destinée à alimenter en électricité un véhicule, notamment une automobile, et un bac selon un mode de réalisation de l'invention, ce bac étant prévu pour permettre la fixation de la batterie sur le véhicule.

La batterie B est une batterie du commerce et n'a pas à être décrite de façon détaillée ici.

On indiquera simplement qu'elle comporte deux faces longitudinales 1a, 1b s'étendant verticalement et dont les extrémités inférieures se terminent chacune par un talon 2a, 2b.

Les talons 2a et 2b s'étendent sur toute la longueur du côté inférieur des faces longitudinales 1a, 1b. Ils pourraient toutefois être constitués de plusieurs éléments séparés situés les uns à la suite des autres.

Le bac comprend un fond 3 sur lequel se dressent deux parois longitudinales parallèles 4a, 4b reliées par deux parois transversales 5a, 5b également parallèles.

Le fond 3 est rectangulaire, ses dimensions étant légèrement supérieures à celles du fond de la batterie afin que celle-ci puisse reposer contre lui sans trop de jeu, comme représenté sur la figure 2.

Les parois longitudinales 4a, 4b sont perpendiculaires aux parois transversales 5a, 5b.

La paroi longitudinale 4a comporte une protubérance interne 6 tandis que la paroi longitudinale 4b comporte des moyens d'immobilisation 7 déplaçables entre une position inactive visible sur la figure 3 et une position active visible sur les figures 1 et 2.

Lorsque les moyens d'immobilisation sont dans leur position active et que la batterie B repose sur le fond 3 du bac, la protubérance 6 prend appui sur la partie supérieure du talon 2a tandis que les moyens d'immobilisation 7 prennent appui sur la partie supérieure du talon 2b.

Grâce à cette action combinée de la protubérance 6 et des moyens d'immobilisation 7, la batterie B est parfaitement bloquée contre le fond 3 du bac.

Dans le mode de réalisation représenté sur les figures 1 à 3, les moyens d'immobilisation 7 comprennent un volet incliné 8 monté pivotant sur un axe 9 prenant appui sur la paroi longitudinale 4b, et des moyens élastiques 10 sollicitant le volet dans sa position active.

Le volet 8 comporte un côté longitudinal supérieur 8a et un côté longitudinal inférieur 8b, lequel est situé plus près de la protubérance 6 et du fond 3 que le côté longitudinal supérieur 8a.

Les côtés 8a et 8b sont parallèles à l'axe 9 qui s'étend parallèlement à la paroi 4a et au fond 3 du bac et qui est positionné pour que la batterie fasse pivoter le volet 8 de sa position active à sa position inactive lorsqu'elle est amenée contre le fond 3.

Dans l'exemple représenté, les moyens élastiques 10 sont constitués par un ressort hélicoïdal enfilé sur l'axe 9 et dont les extrémités prennent respectivement appui sur la paroi 4b et sur le volet 8. Ils pourraient toutefois comprendre un deuxième ressort enfilé sur l'axe 9, du côté opposé au ressort susmentionné.

Bien entendu, le ou les ressorts hélicoïdaux pourraient être remplacés par d'autres moyens élastiques connus.

On notera que le volet 8 comporte une butée 11 située au niveau de son côté longitudinal supérieur 8a et destinée à l'empêcher de pivoter au-delà de sa position active.

La butée 11 vient en effet s'appuyer contre la paroi 4b du bac lorsque le volet est dans sa position active représentée sur la figure 2.

Afin que le volet 8 ne s'avance que faiblement au-dessus du fond 3 du bac, son axe de pivotement 9 s'étend dans un compartiment 12 faisant saillie extérieurement sur la paroi 4b, comme représenté sur la figure 1.

Le bac selon le mode de réalisation qui vient d'être décrit permet d'immobiliser ou d'enlever la batterie B sans outil et très facilement.

Pour immobiliser la batterie dans le bac, il convient de la positionner au-dessus du fond et d'insérer le talon 2a sous la protubérance 6, comme représenté sur la figure 3, ce qui peut être réalisé en la faisant pivoter dans le sens inverse de la flèche F ou en la déplaçant en translation en direction de la protubérance 6.

Pendant que la batterie pivote ou se déplace en translation, le talon 2b déplace le volet 8 vers sa position inactive en agissant à l'encontre de l'action du ressort 10.

Puis, dès que la batterie est en place contre le fond 3, le volet 8 revient, sous l'action du ressort 10, dans sa position active visible sur la figure 2 et dans laquelle son côté longitudinal inférieur 8b s'avance au-dessus du talon 2b.

Pour extraire la batterie du bac, il convient de faire pivoter manuellement le volet 8 de la position active à la position inactive visible sur la figure 3, de faire pivoter la batterie dans le sens de la flèche F et de la soulever.

Etant donné que les différentes étapes décrites ci-dessus sont réalisables sans outil, la batterie peut donc être immobilisée ou enlevée avec facilité et rapidité.

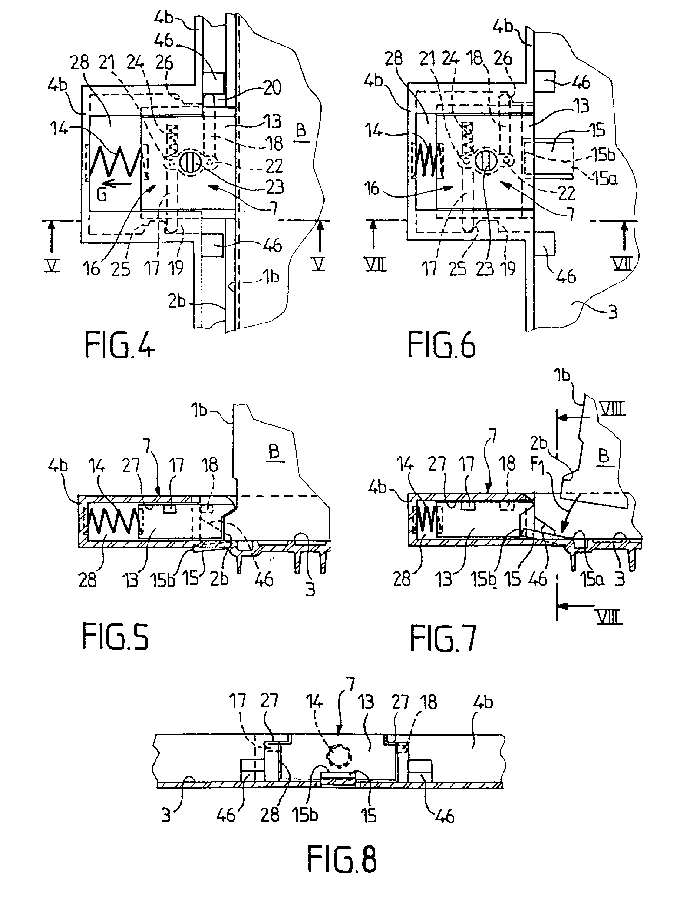

Dans le mode de réalisation représenté sur les figures 4 à 8, les moyens d'immobilisation 7 comprennent une plaquette 13 déplaçable à la fois parallèlement au fond 3 et perpendiculairement à la paroi 4b, et des moyens élastiques 14 sollicitant la plaquette dans sa position active représentée sur les figures 4 et 5.

Les moyens élastiques 14 sont constitués par un ressort hélicoïdal dont l'axe longitudinal est perpendiculaire à la paroi 4b et qui s'étend entre cette paroi et la plaquette 13.

Un deuxième ressort hélicoïdal identique au premier pourrait éventuellement être prévu. Dans ce cas, les deux ressorts seraient parallèles et de préférence adjacents.

Bien entendu, d'autres moyens élastiques classiques pourraient être utilisés à la place du ou des ressorts hélicoïdaux.

Le bac comporte une patte élastique 15 destinée à retenir la plaquette 13 dans sa position inactive lorsque la batterie B n'est pas installée dans le bac.

Cette patte est déplaçable entre une position saillante visible sur la figure 7 et dans laquelle elle sert de buté à la plaquette 13 lorsque celle-ci est dans sa position inactive, et une position effacée visible sur la figure 5 et dans laquelle elle est escamotée par la batterie lorsque celle-ci repose contre le fond 3, la plaquette étant alors dans sa position active.

Dans le mode de réalisation représenté, la patte 15 comporte un premier côté longitudinal 15a parallèle à la paroi 4b et articulé sur le fond 3, et un deuxième côté longitudinal 15b parallèle au côté 15a et contre lequel la plaquette 13 prend appui lorsqu'elle est dans sa position inactive.

Le bac comprend également des moyens de verrouillage 16 destinés à bloquer la plaquette 13 dans sa position active.

Grâce à ces moyens, la plaquette ne peut donc revenir dans sa position inactive lorsque la batterie repose contre le fond 3, ce qui évite que celle-ci soit éjectée du bac en cas d'accident.

Dans le mode de réalisation représenté, les moyens de verrouillage 16 comprennent deux doigts parallèles 17,18 montés sur la plaquette et déplaçables sur celle-ci en sens inverse entre une position verrouillée visible sur la figure 4 et dans laquelle ils font saillie dans deux logements 19,20 ménagés dans la paroi 4, et une position déverrouillée (non représentée) dans laquelle ils sont hors des logements 19,20.

Les doigts 17,18 sont respectivement articulés sur deux oreilles 21,22 diamétralement opposées sur un organe rotatif 23 conçu pour tourner sous la commande d'un outil conventionnel, par exemple un tournevis, à l'encontre de l'action d'un organe élastique 24 monté de façon à solliciter les doigts dans leur position verrouillée.

Dans le mode de réalisation représenté, l'organe élastique 24 est constitué par un ressort hélicoïdal pré-comprimé s'étendant dans le prolongement du doigt 17, entre l'extrémité de ce doigt qui est opposée au logement 19 et une butée située sur la plaquette 13.

Le ressort hélicoïdal pourrait toutefois s'étendre dans le prolongement du doigt 18, entre l'extrémité de celui-ci qui est opposée au logement 20 et une butée prévue sur la plaquette.

Il va de soi qu'un organe élastique 24 pourrait être associé à chacun des doigts 17 et 18 et que le ou les ressorts hélicoïdaux pourraient être remplacés par des dispositifs élastiques classiques assurant la même fonction.

On précisera par ailleurs que les moyens de verrouillage 16 pourraient ne comporter qu'un seul doigt monté sur la plaquette 13, ce doigt étant sollicité dans sa position verrouillée par un ressort hélicoïdal ou tout autre organe élastique approprié.

Lorsque la plaquette 13 est dans sa position inactive représentée sur la figure 6, les doigts 17,18 viennent dans une deuxième position verrouillée dans laquelle ils font respectivement saillie dans deux autres logements 25,26 ménagés dans la paroi 4b et empêchent la plaquette 13 de se déplacer de sa position inactive à sa position active.

La patte élastique 15 dont il a été question ci-dessus pourrait donc être supprimée puisque les doigts 17,18 jouent dans ce cas le même rôle qu'elle.

Pour être complet, on précisera maintenant que la plaquette 13 est montée coulissante le long de chemins de guidage 27 prévus dans un compartiment 28 faisant saillie extrêmement sur la paroi 4b.

Grâce à ce compartiment, la plaquette ne s'avance que sur une faible distance au-dessus du fond 3, ce qui permet de réduire les dimensions de ce dernier et donc du bac.

Pour immobiliser la batterie B dans le bac selon le deuxième mode de réalisation, on procède de la manière suivante.

On place tout d'abord la plaquette 13 dans sa position inactive représentée sur les figures 6 et 7. Pour ce faire, on fait tourner l'organe rotatif 23 dans le sens adéquat à l'aide d'un tournevis (puisque l'organe rotatif comporte une fente appropriée pour recevoir la tige de celui-ci) afin d'amener les doigts 17,18 dans leur position déverrouillée, puis l'on déplace la plaquette 13 dans le sens de la flèche G de la figure 4 afin de comprimer le ressort 14.

Lorsque la plaquette arrive dans sa position inactive, les doigts 17,18 viennent automatiquement dans les logements 25,26 sous l'action du ressort 24, tandis que la patte élastique 15 vient automatiquement dans sa positon saillante dans laquelle son côté longitudinal 15b sert de butée à la plaquette.

On dépose maintenant la batterie B contre le fond 3 en insérant son talon 2a sous la protubérance 6 , ce qui peut être réalisé en la faisant pivoter dans le sens de la flèche F1 sur la figure 7 ou en la déplaçant en translation en direction de la protubérance 6.

Sous l'effet de son propre poids, la batterie déplace la patte élastique 15 dans sa position effacée de sorte qu'il suffit maintenant de faire tourner l'organe rotatif 23 à l'aide du tournevis pour amener les doigts 17,18 dans leur position déverrouillée.

Dès que les doigts 17,18 ne font plus saillie dans les logements 25,26, le ressort hélicoïdal 14 se détend en déplaçant la plaquette 13 dans sa position active visible sur les figures 6 et 7.

Dès que la plaquette arrive dans cette position, les doigts 17, 18 pénètrent dans les logements 19 et 20 sous l'action du ressort 24, empêchant ainsi la plaquette de se déplacer vers sa position inactive.

La batterie B est ainsi immobilisée fermement contre le fond 3 du bac et ne peut donc être éjectée de celui-ci, par exemple lors d'un accident de la circulation.

En fait, l'utilisation des doigts 17, 18 pour verrouiller la plaquette 13 dans sa position inactive est moins préconisée car elle nécessite un outil. Le verrouillage de la plaquette 13 dans cette position pourrait en effet être assuré uniquement par la patte élastique 15, celle-ci venant automatiquement dans sa position saillante lorsque la plaquette vient dans sa position inactive.

Pour enlever la batterie du bac, il convient de déplacer les doigts 17,18 dans leur position déverrouillée en faisant tourner l'organe rotatif 23 dans le sens approprié à l'aide du tournevis, et d'amener la plaquette 13 dans sa position inactive en la déplaçant manuellement dans le sens de la flèche G sur la figure 4, à l'encontre de l'action du ressort hélicoïdal 14.

Il suffit maintenant de saisir la batterie et de la soulever pour l'extraire du bac.

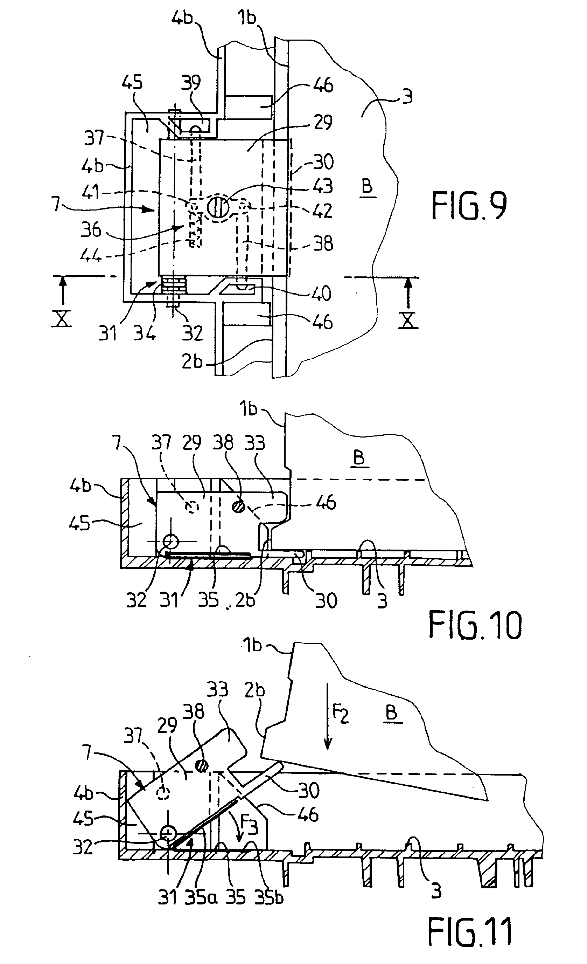

Dans le mode de réalisation représenté sur les figures 9 à 11, les moyens d'immobilisation 7 comprennent une bridé 29 comportant un prolongement 30 s'avançant vers la protubérance 6, ainsi que des moyens élastiques 31 sollicitant la bride dans sa position inactive représentée sur la figure 11.

La bride 29 est montée pivotante sur un axe 32 prenant appui sur la paroi 4b et s'étendant parallèlement à cette dernière et au fond 3.

Elle est tournée vers le haut lorsqu'elle est dans sa position inactive et repose contre le fond 3 lorsqu'elle est dans sa position active visible sur les figures 9 et 10, son déplacement dans cette position étant assuré par le talon 2b de la batterie qui prend appui contre le prolongement 30 lorsque celle-ci est amenée contre le fond 3.

On notera que la bride 29 comporte une saillie 33 surplombant le prolongement 30 et sous laquelle s'engage le talon 2b de la batterie lorsque celle-ci est en place dans le bac, comme représenté sur la figure 10.

Grâce à cette saillie, la batterie ne risque donc pas d'être extraite accidentellement du bac.

Dans l'exemple représenté, les moyens élastiques 31 comprennent un ressort hélicoïdal 34 enfilé sur l'axe de pivotement 32 de la bride 29 et dont les extrémités prennent respectivement appui sur la paroi 4b et sur la bride. Un deuxième ressort hélicoïdal enfilé sur l'axe 32, du côté opposé au premier ressort, pourrait toutefois être prévu.

Les moyens élastiques 31 comprennent également une lame coudée 35 réalisée de préférence en métal, notamment en acier. Comme on peut le voir sur les figures 10 et 11, cette lame comporte deux tronçons 35a, 35b ayant un côté commun et fixés l'un sur la bride 29 et l'autre sur le fond 3, leur côté opposé à leur côté commun étant tourné vers la protubérance 6.

On notera ici que la lame coudée 35 pourrait être supprimée ou utilisée seule.

Comme on peut le voir sur la figure 11, la bride 29 prend appui contre la paroi 4b lorsqu'elle est dans sa position inactive. La paroi 4b lui sert en effet de butée l'empêchant de pivoter au -delà de sa position inactive sous l'action des moyens élastiques 31.

Des moyens de verrouillage 36 sont par ailleurs prévus pour verrouiller la bride 29 dans sa position active. Ces moyens sont du type de ceux prévus dans le mode de réalisation décrit en référence aux figures 4 à 8.

Ils comprennent en effet deux doigts parallèles 37, 38 montés sur la bride et déplaçables sur celle-ci en sens inverse entre une position verrouillée dans laquelle ils font respectivement saillie dans deux logements 39, 40 ménagés dans la paroi 4b, et une position déverrouillée dans laquelle ils sont hors de ces logements.

les doigts 37, 38 sont respectivement articulés sur deux oreilles 41, 42 diamétralement opposées d'un organe rotatif 43 conçu pour tourner sous la commande d'un outil conventionnel tel qu'un tournevis, à l'encontre d'un organe élastique 44 sollicitant les doigts dans leur position verrouillée.

L'organe élastique 44 est de préférence constitué par un ressort hélicoïdal pré-comprimé s'étendant dans le prolongement du doigt 37, entre l'extrémité de celui-ci qui est opposée au logement 39 et une butée située sur la bride 29.

Le ressort hélicoïdal pourrait éventuellement être placé dans le prolongement du doigt 38, entre l'extrémité de celui-ci, qui est opposée au logement 40 et une buté prévue sur la bride.

Un organe élastique 44 pourrait bien entendu être associé à chacun des doigts 37, 38 si cela s'avérait nécessaire.

On précisera ici que les moyens de verrouillage 36 pourraient ne comporter qu'un seul doigt monté sur la bride 29, ce doigt étant sollicité dans sa position verrouillée par un ressort hélicoïdal ou tout autre organe élastique approprié.

On notera par ailleurs que l'axe de pivotement 32 de la bride 29 est situé dans un compartiment 45 faisant saillie extérieurement sur la paroi 4b. Grâce à ce compartiment, la bride ne s'avance que sur une faible distance' au dessus du fond 3, ce qui permet de réduire les dimensions de ce dernier et donc du bac.

Pour immobiliser la batterie B dans le bac selon le troisième mode de réalisation, on procède de la manière suivante.

On place tout d'abord la bride 29 dans sa position inactive représentée sur la figure 11. On dispose ensuite la batterie B au-dessus du fond 3 en insérant son talon 2a sous la protubérance 6 et en appliquant son talon 2b contre le prolongement 30 de la bride, comme représenté sur la figure 11.

On exerce maintenant une pression sur la batterie dans le sens de la flèche F2 de la figure 11. La bride 29 pivote alors dans le sens de la flèche F3 en direction du fond 3, à l'encontre de l'action du ressort 34 et de la lame coudée 35.

Pour que la bride 29 vienne contre le fond 3, il convient toutefois de faire pivoter l'organe rotatif 43 dans le sens adéquat pour amener les doigts 37, 38 dans leur position déverrouillée.

Puis, lorsque la bride est dans sa position active visible sur la figure 10, les doigts 37, 38 viennent automatiquement dans leur position verrouillée sous l'action du ressort 44.

La bride est maintenant bloquée dans sa position active, de sorte que la batterie 13 ne peut-être éjectée du bac lors d'un accident de la circulation.

Pour enlever la batterie du bac, on amène les doigts 37, 38 dans leur position déverrouillée en faisant tourner l'organe rotatif 43 dans le sens adéquat.

Comme cet organe comporte une fente rectiligne sur sa face supérieure, un tournevis peut être utilisé pour effectuer cette opération.

Lorsque les doigts sont dans leur position déverrouillée, le ressort 34 et la lame coudée 35 sollicitent la bride dans sa position inactive, ce qui facilite la tâche de l'opérateur qui souhaite extraire la batterie du bac.

Dans les trois modes de réalisation qui viennent d'être décrits, la paroi 4b comporte au moins deux pans inclinés 46 conformés pour déporter la batterie B vers la protubérance 6 pendant son déplacement vers le fond 3.

Grâce à ces pans inclinés, le positionnement de la batterie sur le fond 3 du bac est assuré avec précision, sans risque de coincement et sans qu'il soit nécessaire de la faire pivoter au niveau du talon 2a.

Il va de soi que l'on ne sortirait pas du cadre de la présente invention si l'on remplaçait la protubérance 6 de la paroi 4a du bac par un deuxième volet 8, une deuxième plaquette 13 ou une deuxième bride 29.

Pour être complet, on précisera que le bac des trois modes de réalisation qui viennent d'être décrits, ainsi que le volet 8, la plaquette 13 et la bride 29 sont de préférence réalisés en une matière plastique résistant aux acides.

## Revendications

1. Bac pour fixer sur un véhicule, notamment sur une automobile, une batterie (B) comportant deux faces latérales opposées (1a, 1b) pourvues d'au moins un talon (2a, 2b), bac comprenant un fond (3) destiné à supporter la batterie, quatre parois (4a, 4b ; 5a, 5b) se dressant sur le fond et s'étendant parallèlement deux à deux, au moins une protubérance interne (6) faisant saillie sur l'une (4a) des parois, des moyens d'immobilisation (7) montés sur la paroi (4b) située en face de la protubérance (6) et déplaçables entre une position inactive et une position active, et des moyens élastiques (10) sollicitant les moyens d'immobilisation (7) dans leur position active, la protubérance (6) et les moyens d'immobilisation (7), lorsque ces derniers sont dans leur position active, prenant appui sur la partie supérieure des talons (2a, 2b) de la batterie quand celle-ci repose sur le fond (3), **caractérisé en ce que** les moyens d'immobilisation (7) comprennent au moins un volet incliné (8) monté pivotant sur un axe (9) prenant appui sur la paroi (4b) située en face de la protubérance (6) et s'étendant parallèlement à cette paroi et au fond (3), le volet (8) possédant un côté longitudinal supérieur (8a) et un côté longitudinal inférieur (8b) situé plus près de la protubérance (6) et du fond (3) que le côté supérieur (8a), et étant positionné pour que la batterie (B) le déplace de sa position active à sa position inactive, à l'encontre de l'action des moyens élastiques (10), lorsqu'elle est amenée contre le fond.

2. Bac selon la revendication 1, **caractérisé en ce que** les moyens élastiques (10) comprennent au moins un ressort hélicoïdal enfilé sur l'axe de pivotement (9) du volet (8) et dont les extrémités prennent respectivement appui sur la paroi (4b) située en face de la protubérance (6) et sur le volet (8).

3. Bac selon la revendication 1 ou 2, **caractérisé en ce que** le volet (8) comporte une butée (11) prenant appui contre la paroi (4b) située en face de la protubérance (6) lorsqu'il est dans sa position active.

4. Bac selon l'une quelconque des revendications 1 à 3, **caractérisé en ce que** l'axe de pivotement (9) du volet (8) s'étend dans un compartiment (12) faisant saillie extérieurement sur la paroi (4b) située en face de la protubérance (6).

5. Bac selon l'une quelconque des revendications 1 à 4, **caractérisé en ce que** la paroi (4b) qui est située en face de la protubérance (6) comporte au moins deux plans inclinés (46) conformés pour déporter la batterie (B) vers la protubérance (6) pendant son déplacement vers le fond (3).

## Claims

1. A casing for fixing on a vehicle, in particular a motor vehicle, a battery (B) having two opposed side faces (1a, 1b) provided with at least one heel (2a, 2b), said casing comprising a bottom (3) for supporting the battery, four walls (4a, 4b; 5a, 5b) standing up from the bottom and extending parallel in pairs, at least one inner projection (6) protruding from one wall (4a), securing means (7) mounted on the wall (4b) located opposite to the projection (6) and movable between an inactive position and an active position, and spring means (10) biasing the securing means (7) into their active position, with the projection (6) and the securing means (7) when in their active position, bearing against the upper part of the heels (2a, 2b) of the battery when said battery is resting on the bottom (3), **characterized in that** the securing means (7) comprise at least one inclined flap (8) pivotally mounted on a pin (9) supported on the wall (4b) located opposite to the projection (6) and extending parallel to said wall and to the bottom (3), the flap (8) having an upper longitudinal side (8a) and a lower longitudinal side (8b), which is located closer to the projection (6) and bottom (3) than the upper side (8a), and being positioned so as to be moved from its active position to its inactive position, against the action of the spring means (10), by the battery (B) when the latter is brought against the bottom.

2. The casing according to claim 1, **characterized in that** the spring means (10) comprise at least one helical spring fitted on the pivot pin (9) of the flap (8), with its ends bearing on the wall (4b) located opposite to the protrusion (6) and on the flap (8), respectively.

3. The casing according to claim 1 or 2, **characterized in that** the flap (8) comprises a stop (11) bearing against the wall (4b) located opposite to the projection (6), when in its active position.

4. The casing according to any of claims 1 to 3, **characterized in that** the pivot pin (9) of the flap (8) extends into a compartment (12) projecting outwardly from the wall (4b) located opposite to the projection (6).

5. The casing according to any of claims 1 to 4, **characterized in that** the wall (4b) located opposite to the projection (6) comprises at least two inclined planes (46) so formed as to offset the battery (B) towards the projection (6) during its movement towards the bottom (3).

## Patentansprüche

1. Behälter, um an einem Fahrzeug, insbesondere an einem Kraftfahrzeug, eine Batterie (B), die zwei gegenüberliegende, mit wenigstens einem Ansatz (2a, 2b) ausgestattete Seitenwände (1a, 1 b) umfasst, zu befestigen, wobei der Behälter einen Boden (3), der die Batterie tragen soll; vier Wände (4a, 4b; 5a, 5b), die sich an dem Boden aufrichten und sich jeweils paarweise parallel erstrecken; wenigstens eine innere Ausbauchung (6), die an einer (4a) der Wände vorspringt; Festsetzeinrichtungen (7), die an der Wand (4b), die sich gegenüber der Ausbauchung (6) befindet, angebracht sind und zwischen einer inaktiven und einer aktiven Position bewegt werden können; und elastische Einrichtungen (10), die die Festsetzeinrichtungen (7) in ihrer aktiven Position beanspruchen, umfasst, wobei die Ausbauchung (6) und die Festsetzeinrichtungen (7), während die Letztgenannten sich in ihrer aktiven Position befinden, an dem oberen Teil der Ansätze (2a, 2b) der Batterie zur Anlage kommen, wenn diese auf dem Boden (3) ruht, **dadurch gekennzeichnet, dass** die Festsetzeinrichtungen (7) wenigstens eine geneigte Klappe (8) umfassen, die schwenkbar an einer Achse (9) angebracht ist und an der Wand (4b), die sich gegenüber der Ausbauchung (6) befindet, zur Anlage kommt und sich parallel zu dieser Wand und dem Boden (3) erstreckt, wobei die Klappe (8) eine obere Längsseite (8a) und eine untere Längsseite (8b), die sich näher an der Ausbauchung (6) und dem Boden (3) befindet, aufweist und so positioniert ist, dass die Batterie (B) sie gegen die Wirkung der elastischen Einrichtungen (10) von ihrer aktiven Position zu ihrer inaktiven Position bewegt, während sie zu dem Boden hin geführt wird.

2. Behälter nach Anspruch 1, **dadurch gekennzeichnet, dass** die elastischen Einrichtungen (10) wenigstens eine Schraubenfeder umfassen, die an der Schwenkachse (9) der Klappe (8) aufgefädelt ist und deren Enden jeweils an der Wand (4b), die sich gegenüber der Ausbauchung (6) befindet, und an der Klappe (8) zur Anlage kommen.

3. Behälter nach Anspruch 1 oder 2, **dadurch gekennzeichnet, dass** die Klappe (8) ein Widerlager (11) umfasst, das gegen die Wand (4b), die sich gegenüber der Ausbauchung (6) befindet, zur Anlage kommt, wenn sie sich in seiner aktiven Position befindet.

4. Behälter nach einem der Ansprüche 1 bis 3, **dadurch gekennzeichnet, dass** sich die Schwenkachse (9) der Klappe (8) in einer Kammer (12) erstreckt, die nach au-ßen über die Wand (4b), die sich gegenüber der Ausbauchung (6) befindet, vorspringt.

5. Behälter nach einem der Ansprüche 1 bis 4, **dadurch gekennzeichnet, dass** die Wand (4b), die sich gegenüber der Ausbauchung (6) befindet, wenigstens zwei geneigte Flächen (46) umfasst, die dazu eingerichtet sind, die Batterie (B) in Richtung der Ausbauchung (6) zu verschieben, während sie sich in Richtung des Bodens (3) bewegt.
